# EUROPÄISCHE PATENTSCHRIFT

(11) **EP 0 276 263 B1**
(45) Veröffentlichungstag und Bekanntmachung des Hinweises auf die Patenterteilung: **17.04.1996**
(21) Anmeldenummer: 87904830.4
(22) Anmeldetag: 06.08.1987
(51) Int. Cl.: B62M 1/10, F16H 25/00

(54) **ANTRIEBSVORRICHTUNG**
DRIVE DEVICE
MECANISME MOTEUR

(30) Priorität: 07.08.1986 CH 3170/86; 14.10.1986 CH 4107/86; 13.05.1987 CH 1835/87
(43) Veröffentlichungstag der Anmeldung: 03.08.1988
(73) Patentinhaber: HIRMANN, Georg, CH-8037 Zürich (CH)
(72) Erfinder: HIRMANN, Georg, CH-8037 Zürich (CH)
(86) Internationale Anmeldenummer: CH8700096
(87) Internationale Veröffentlichungsnummer: WO8800902

(56) Entgegenhaltungen:
- WO-A-84/01199
- DE-C- 81 252
- GB-A- 449 917
- GB-A- 1 005 616
- US-A- 2 149 623

## Beschreibung

Die vorliegende Erfindung betrifft eine Antriebsvorrichtung für einen drehenden Teil, insbesondere Fahrzeugachse gemäß dem ersten Teil des Anspruchs 1; eine solche Vorrichtung ist aus dem WO84/01199 bekannt (Fig 9).

Die Erfindung wird anschliessend beispielsweise anhand der folgenden Zeichnungen erläutert.

Fig. 1 Ausführungsbeispiel eines Antriebspedals eines Fahrrades mit komplexen Funktionen.

Fig. 2 einen Fahrzeugantrieb.

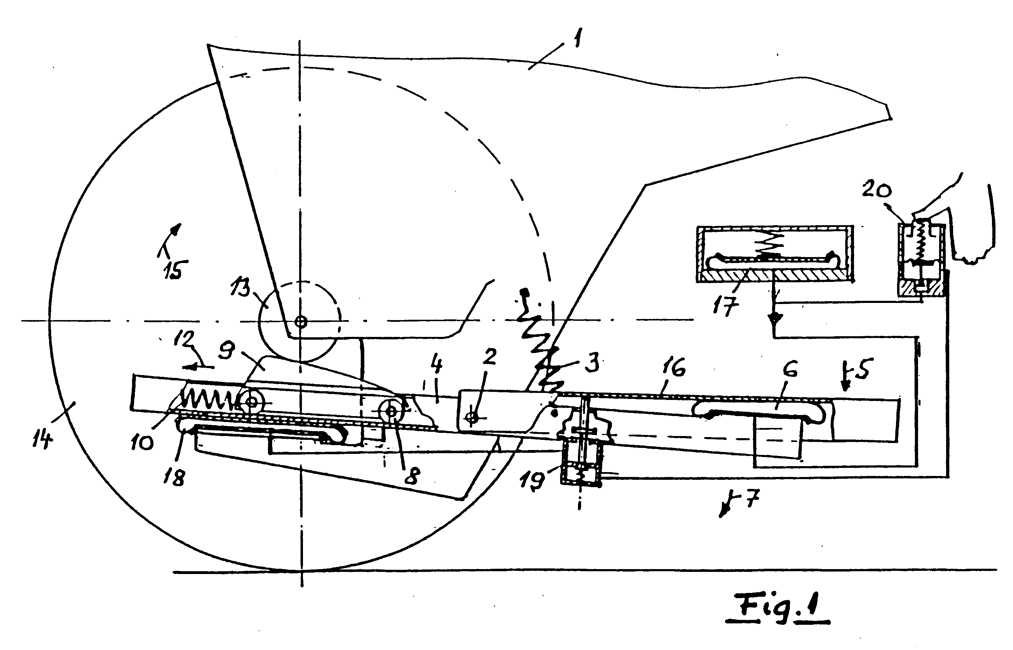

Fig. 1 zeigt ein Ausführungsbeispiel eines Antriebspedals eines Fahrrades mit komplexen Funktionen. Der am Rahmen 1 gebildete Drehpunkt 2, gelenkig aufgehängte und über Feder 3 sowie Anschlag gehaltene Hebel 4, weist die folgenden Funktionen auf: Durch den Fussdruck 5 wird, durch Pumpzelle 6 gestützt, der Hebel 4 in Richtung 7 bewegt, worauf sich der im Hebel mit Rollen 8 geführte keilförmiger Körper 9, gegen Rückholfeder 10, sich in Richtung 12 und gleichzeitig das Reibrad 13 und das damit starrgekoppelte Rad 14, in Richtung 15 bewegt.

Beim Entlasten des Hebels wird dieser durch Feder 3 und der Keil 9 durch Feder 10 in die Ausgangslage gebracht.

Die vorgehend beschriebene Funktionsweise entspricht dem direkten Tangentialkraft-Impulsantrieb. Die sich unter dem Pedal 16 befindliche Pumpzelle 6 dient zur Abzweigung eines Teiles der Antriebsenergie, um damit einen Druckspeicher 17 zu füllen, welcher über Kraftzelle 18 als Kraftverstärker über Steuerventil 19 und Druckregler 20 nach Bedarf zugeschaltet werden kann.

Damit wird es möglich, einem Fahrrad - insbesondere im Stadtverkehr - ein Beschleunigungsvermögen zu verleihen, wodurch ein Überhol- oder Vorfahrbedürfnis eines Automobils nach Grünlicht gemindert wird.

Die gepufferte Speisung dieser Art kann ebenfalls bei der Überwindung von kurzen Steigungen helfen. Zur Fahrsicherheit bringt die mögliche, niedrige Bauart des Fahrrades einen wesentlichen Beitrag.

Die dargestellte Antriebseinrichtung kann je nach Anwendungsfall und Zweck
- einzeln oder beidseitig
- nur mechanisch
- mechanisch mit pneumatischem Speicher und mit zusätzlichem Keilmotor
- mechanisch mit pneumatischem Speicher und Kraftverstärker (wie Fig. 1)
- nur pneumatisch über Pufferspeicher mit pneumatischem Keilmotor angewendet werden.

Zur Anpassung oder Änderung der Impulsübersetzung kann der Keil 9 ausgewechselt oder beispielsweise seitlich auf ein Reibrad mit abweichender Durchmessergrösse versetzt werden. Durch die Formgebung der Antriebsfläche des Keiles kann ein gleichförmiger oder anders geformter Impuls erzeugt werden.

Für den mechanischen Impuls für gleichförmige Bewegung bei einem Schwenkpedalantrieb ergibt sich für den konstanten Keilschubwinkel eine Evolventenform.

Ähnliche Impulsantriebe können - mit oder ohne Speicher - ebenfalls zum rotierenden Antrieb von stationären Einrichtungen, wie Lüfter, Zentrifugen, Wickeleinrichtungen, Schleifscheiben, wie auch zum linearen Vorschub von Gegenständen oder Schubeinbrichtungen zur Bewegung von Lasten dienen.

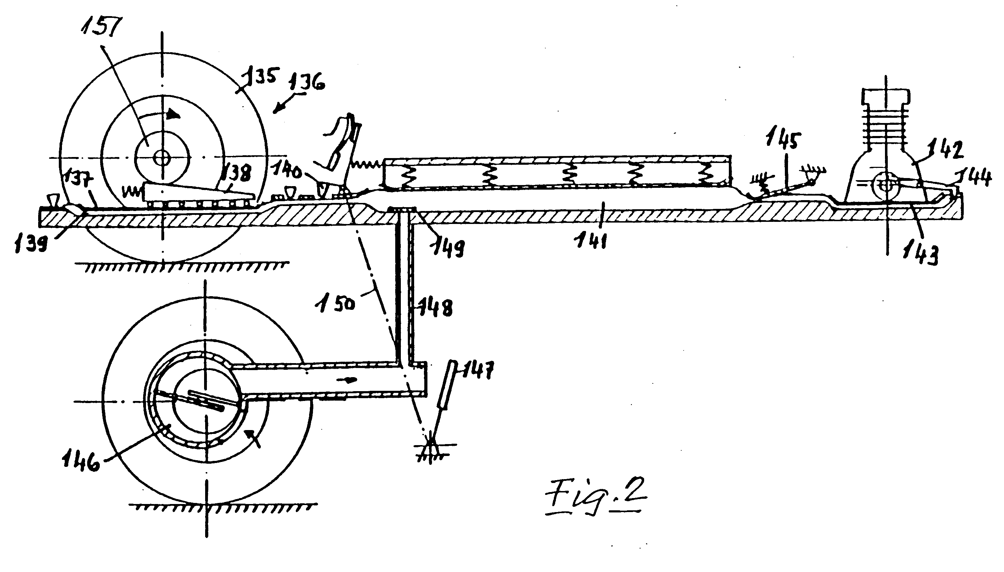

Fig. 2 zeigt als Beispiel die Anordnung der Funktionsteile bei einem gepufferten Niederdruck-Fahrzeugantrieb mit dem aktiven Keil (Keilmotor). Die anzutreibenden Räder 135 werden mit mindestens einem Keilmotor 136 versehen. Die Führungsplatte 137 des aktiven Keils 138 wird beispielsweise mit einer Kraftzelle 139 betätigt. Die Druckluftzufuhr wird mit Fahrventil 140 geregelt.

Solche Fahrzeugantriebe werden mit Vorteil durch Pufferspeicher 141 betrieben, wodurch der Antriebsmotor 142 - für den mittleren Leistungsbedarf dimensioniert - wesentlich kleiner werden kann als bei konventionellen Fahrzeugantrieben, weil die zur Beschleunigung des Fahrzeugs notwendige Energie im Druckspeicher zur Verfügung steht.

Die Figur Zeigt einen Fahrzeugantrieb, bestehend aus Motor 142, Kompressorteil 143, kurvengesteuertem Ansaugventil 144, Rückschlagventil 145 und Federdruckspeicher (Pufferspeicher) 141.

Die Darstellung zeigt die Übersicht der gekoppelten Funktionsteile, unter Anwendung von Schlauchelementen als Beispiel. Die selben Funktionen können auch aus anderen Elementen aufgebaut werden.

Der federbelastete Druckspeicher kann nebst einfachem Aufbau eine volle Ausnützung des Speicherraumes und eine flache Druckkennlinie ergeben.

Als Kompressor können verschiedene Systeme verwendet werden, wie auch Druckgasgeneratoren chemischer Art.

Um potentielle Energie beim Bergfahren oder die kinetische Energie beim Abbremsen des Fahrzeuges auszunützen, können ein oder mehrere Bremskompressoren mit Rädern verbunden werden. Dadurch kann auch ein rekuperativer Betrieb zur Füllung des Druckspeichers erfolgen.

Solche Bremsen können eine mit steigender Drehzahl progressive Bremskraft entwickeln.

Die Figur zeigt als Beispiel einen Flügelzellenkompressor 146, mit Bremsklappe 147, Speicheranschluss 148 mit Rückschlagventil 149, gekoppelt 150 mit Fahrventil 140.

## Patentansprüche

1. Vorrichtung zum Antreiben eines drehenden Teiles, insbesondere Fahrzeugachse, mit mindestens einem keilförmigen Teil und einem Druckelement, dadurch gekennzeichnet, dass das keilförmige Teil einerseits über eine reibungsarme Lagerung am dem Druckelement anliegt, welches in der Vorschubphase eine radial gegen die Drehachsmitte wirkende Kraft auf das keilförmige Teil ausübt, und andererseits an einem mit dem drehenden Teil fest verbundenen konzentrischen Reibrad, so dass dort eine dem Keilwinkel entsprechende Komponente der Druckkraft in eine Tangentialkraft umgesetzt wird.

2. Vorrichtung zum Antreiben eines drehenden Teiles, insbesondere Fahrzeugachse, dadurch gekennzeichnet, dass die radial wirkende Kraft durch Muskelkraft direkt oder über einen hydrostatischen, vorwiegend pneumatischen Druckmedium-Pufferspeicher erzeugt wird. (Fig. 1.)

3. Vorrichtung zum Antreiben eines drehenden Teiles, insbesondere Fahrzeugachse nach Patentanspruch 1, dadurch gekennzeichnet, dass der Druckgeber von hydrostatischer, vorzugsweise pneumatischer Art ist und ebenfalls vorzugsweise, zum Ausgleich von Spitzenbelastungen, über einen Druckmedium-Pufferspeicher gespeist wird. (Fig. 2)

## Claims

1. Device for driving a rotating part, particularly a vehicle axis by means of a wedgeshaped part and a pressure element (characterized); On one hand the wedgeshaped part interfaces with the pressure element through a low friction bearing, which during the "push-phase" exerts on the wedgeshaped part a rotary force against the center of the rotating axis. On the other hand a force is exerted on the frictional wheel which ist concentrically connected with the rotating part, thus converting to a tangential force corresponding to the wedgeangle's components of the pressure force.

2. Device for driving a rotating part, particularly a vehicle axis (characterized) whereby the radially acting force is produced directly through muscular power or through a hydrostatic, predominantly a pressure element - external buffer store. (Fig. 1)

3. Device for driving a rotating part, particularly a vehicle axis in accordance with patent claim 1, namely that the pressure pick-off is of a hydrostatic, preferably of a pneumatic type, and, preferably supplied by an external buffer-store for balancing (equalizing) the peak loads. (Fig. 2)

## Revendications

1. Dispositif d'entrainement d'un élément rotatif, spécialement d'un axe de véhicule se composant d'au moins d'une pièce cunéiforme et d'un élément de pression. D'une part l'élément de pression en phase active, par l'intermédiaire de la pièce cunéiforme, sur son coussinet à faible frottement, initie une force sur le centre de l'axe opposé. D'autre part une roue à frottement, élément intégral de l'axe, transforme la composante axiale en mouvement tangentiel relatif à l'angulation du coin actif.

2. Dispositif d'entrainement d'un élément rotatif, spécialement d'un axe de véhicule dont la composante radiale est initiée par la force musculaire directe ou par l'intermédiaire d'un élément hydrostatique, de préférence par un récipient compensateur pneumatique. (Fig. 1)

3. Dispositif d'entrainement d'un élément rotatif, spécialement d'un axe de véhicule selon la revendication no. 1 activé par un générateur d'énergie hydrostatique, de préférence pneumatique er également de préférence, pour la compensation de pointes, par l'intermédiaire d'un réservoir compensateur de pression. (Fig. 2)
